# EUROPEAN PATENT APPLICATION

(11) **EP 4 640 069 A1**
(43) Date of publication of application: **29.10.2025**
(21) Application number: 25740995.3
(22) Date of filing: 07.02.2025
(51) Int. Cl.: A23L 7/113

(54) **METHOD FOR PRODUCING PACKED NOODLES**

(30) Priority: 08.02.2024 JP 2024017711
(71) Applicant: Shingen Foods Co., Ltd., Koushu-shi, Yamanashi, 404-0054 (JP)
(72) Inventor: The designation of the inventor has not yet been filed
(74) Representative: Schulz Junghans Patentanwälte PartGmbB
(86) International application number: PCT/JP2025/004043
(87) International publication number: WO 2025/170015

(57) **Abstract**

The objective of the present invention is to provide a method of producing a packaged noodle which maintains appropriate firmness even after long-term storage, and simultaneously has high versatility.

The above objective is solved by a method of producing a packaged noodle, comprising the steps of: preparing a pregelatinized noodle; subjecting the pregelatinized noodle to immersion treatment using an immersion liquid comprising a starch degradation product with a DE value of 4 to 25 at a concentration of 20% by mass to 50% by mass, and subject to solid-liquid separation treatment to obtain an immersion liquid-absorbed noodle; and subjecting a container filled with the immersion liquid-absorbed noodle to heat sterilization treatment to obtain the packaged noodle.

## Description

### Technical Field

The present invention relates to a packaged noodle that maintains appropriate firmness even after long-term storage, and simultaneously has high versatility, and a method of producing the packaged noodle.

### Background Art

The precooked processed food products of noodles, such as pasta, *udon, soba* (buckwheat), and *ramen* (Chinese noodle), are required to maintain appropriate firmness (*"koshi"*) without being mushy or soggy. In particular, such products designed for long-term storage are difficult to prevent to become mushy or soggy, and to maintain appropriate firmness.

Pasta, in which wheat is used generally as a raw material, has a dense internal structure and a unique texture with a smooth mouthfeel and an appropriate firmness (crunchiness). Therefore, in precooked processed foods using pasta, maintaining the unique and inherent texture of pasta is an important element to enhance its commercial value.

The present inventor has previously developed a method of producing a packaged noodle that can maintain appropriate firmness even after long-term storage, comprising: filling a noodle previously subjected to heat treatment and freeze treatment and a liquid seasoning containing a specific amount of a starch degradation product having a specific DE value in a container, and subjecting the container to heat sterilization treatment (see, for example, Patent Document 1).

Also, as for a heat-treated noodle that can be stored at room temperature, those obtained by subjecting to low-temperature pasteurization and pH treatment are known (see, for example, Non-Patent Documents 1 and 2).

### Citation List

### Patent Documents

Patent Document 1: JP 6923986 B

### Non-Patent Documents

Non-Patent Document 1: Ma•Ma boiled spaghetti Neapolitan, Nisshin Seifun Werna [online], [retrieved January 31, 2024], Internet <URL: https://www.nisshin-seifun-welna.com/index/products/4902110344981.html>.
Non-Patent Document 2: Udon with Soup, Itsuki Foods Corporation [online], [retrieved January 31, 2024], Internet <URL: https://www.itsukifoods.jp/product_02_udon.html>.

### Summary of the Invention

### Problems to be Solved by the Invention

The method described in Patent Document 1 can maintain appropriate firmness of a noodle even after long-term storage, however, it lacks variety in flavors, since the noodle is packaged together with a liquid seasoning in a container. This causes a problem of failing to meet diversity of consumer preferences.

The noodles described in Non-Patent Documents 1 and 2 have a problem with being relatively short shelf life caused by low-temperature pasteurization, and furthermore, the firmness (crunchiness) of the noodle is not sufficient.

Therefore, the object to be solved by the present invention is to provide a packaged noodle that maintains appropriate firmness even after long-term storage, and simultaneously has high versatility.

### Means of Solving the Problems

In order to obtain a highly versatile packaged noodle, the present inventor attempted to remove seasoning materials as much as possible other than water and the starch degradation product in the liquid seasoning in the method described in Patent Document 1. The present inventor was faced with a problem that appropriate firmness of the noodle was not achieved in some concentrations of the starch degradation product. This was presumed that, in the method described in Patent Document 1, the starch degradation product was contained at the same concentration, but removal of the seasoning materials was conducted, so that the amount of water was increased inevitably, and this increased water migrated into the noodle strings, making the noodle strings impossible to maintain their firmness. In general, water migrates from one having a higher moisture value toward one having a lower moisture value. When the moisture value of the noodle strings is lower and the moisture value of the liquid seasoning is higher, the water in the liquid seasoning will migrate into the noodle strings. Therefore, it may be difficult to maintain the appropriate firmness of the noodle. Then, the present inventor attempted to reduce the content of water in addition to removing the seasoning materials in the method described in Patent Document 1. The present inventor, however, found that the viscosity of the liquid seasoning was increased as the concentration of the starch degradation product became higher excessively. This caused the liquid seasoning to lack sufficient covering or surrounding around the noodle strings. As a result, the present inventor faced the problem of not being able to achieve the appropriate firmness of the noodle. In order to solve this problem, the present inventor conducted a diligent study by reviewing the materials, blending ratios, and manufacturing process of the liquid seasoning.

Finally, the present inventor has succeeded in obtaining a packaged noodle that can maintain appropriate firmness even after long-term storage by subjecting a noodle that has pregelatinized to a certain degree to immersion treatment using an immersion liquid that contains water and a specific starch degradation product at specific amount. In addition, according to the packaged noodle, since the packaged noodle has almost no materials other than water and the starch degradation product, the liquid seasonings (including sauce, soup, dipping sauce, and any other seasonings) and/or ingredients can be selected freely with respect to the noodle. This means that the packaged noodle meets the needs of consumers, and has high versatility. The present invention has been completed based on such successful examples and findings.

Therefore, according to the present invention, there are provided the following embodiments:
[1] A method of producing a packaged noodle, comprising:
   preparing a pregelatinized noodle;
   subjecting the pregelatinized noodle to immersion treatment using an immersion liquid containing a starch degradation product with a DE value of 4 to 25 at a concentration of 20% by mass to 50% by mass, and subject to solid-liquid separation treatment to obtain an immersion liquid-absorbed noodle; and
   subjecting a container filled with the immersion liquid-absorbed noodle to heat sterilization treatment to obtain the packaged noodle.
[2] The method according to the item [1], the packaged noodle has a noodle component with a moisture value of 45% by mass to 63% by mass.
[3] The method according to the item [1] or [2], wherein the immersion liquid has a Brix value between 20 and 50.
[4] The method according to any one of the items [1] to [3], wherein the packaged noodle is at least one noodle selected from the group consisting of Chinese noodle, pasta, *udon* and *somen.*
[5] The method according to any one of the items [1] to [4], wherein the heat sterilization treatment is retort sterilization treatment.
[6] The method according to any one of the items [1] to [5], wherein the immersion liquid further contains at least one material selected from the group consisting of salt and acidifier.
[7] The method according to any one of the items [1] to [6], wherein the packaged noodle is substantially unseasoned.

### Effect of the Invention

According to the present invention, it can be achieved to obtain a packaged noodle that can maintain appropriate firmness even after long-term storage, and simultaneously has high versatility.

### Description of Embodiments

While the packaged noodle according to one embodiment of the present invention and the method of producing the packaged noodle will now be described in details, the technical scope of the present invention is not limited to the details of this section, and the present invention can take various forms to the extent that its objective is achieved.

The term "packaged" means filled or contained in a container.

The term "amount (content) " as used herein is synonymous with "concentration" and means the proportion (for example, % by mass) of the amount (for example, mass) of component relative to the total amount (for example, volume).

The terms "include," "comprise," and "contain" mean that an element(s) other than an element(s) as explicitly indicated can be added as inclusions, which are, for example, synonymous with "at least include," but encompasses the meaning of "consist of" and "substantially consist of". In other words, the terms may mean, for example, to include an element(s) as explicitly indicated as well as any one element or any two or more elements, to consist of an element(s) as explicitly indicated, or substantially consist of an element(s) as explicitly indicated. Such elements include limitations such as components, steps, conditions, and parameters.

The wording "to" for indicating a range of values is intended to include values preceding and following the wording; for example, "0 % to 100 %" means the range from 0 % or more and 100 % or less. The wording "more than" and "less than" mean the lower limit and the upper limit without including a value following the term, respectively. For example, "more than 1" means a value beyond 1, and "less than 100" means a value below 100.

The number of digits of an integer equals to its significant figure. For example, 1 has one significant figure and 10 has two significant figures. For a decimal number, the number of digits after a decimal point equals to its significant figure. For example, 0.1 has one significant figure and 0.10 has two significant figures.

The method of producing the packaged noodle according to one embodiment of the present invention comprises the steps of: preparing a pregelatinized noodle (a-noodle) (hereinafter also referred to as "pregelatinized noodle preparation step"); subjecting the pregelatinized noodle to immersion treatment using an immersion liquid containing a starch degradation product with a DE value of 4 to 25 at 20% by mass to 50% by mass, and then subjecting to solid-liquid separation treatment to obtain an immersion liquid-absorbed noodle (hereinafter also referred to as "immersion treatment step"); and subjecting a container filled with the immersion liquid-absorbed noodle to heat sterilization treatment to obtain the packaged noodle (hereinafter referred to as "heat sterilization treatment step").

The packaged noodle according to one embodiment of the present invention is substantially unseasoned. In the context of the present invention, "substantially unseasoned" means that the packaged noodle is not seasoned using any seasoning materials (seasonings, ingredients, and any other seasoning materials) excepting the starch degradation product and optionally salt and acidifier. Therefore, it means containing no seasoning materials at all or, if containing, it means containing seasoning materials in only a very small amount. In other words, the packaged noodle according to one embodiment of the present invention is not a noodle seasoned or cooked in advance for eating as it is. Thus, the packaged noodle is used together with any liquid seasonings (including sauce, soup, dipping sauce, and any other seasonings) and/or ingredients when seasoning or cooking.

### [Pregelatinized noodle preparation step]

In the pregelatinized noodle preparation step, it is achieved to prepare a pregelatinized noodle.

In the present invention, the term "pregelatinized noodle" refers a noodle in which starch contained in the noodle is pregelatinized. Such pregelatinization may be conducted by subjecting a non-pregelatinized noodle (a dried, semi-dried or fresh noodle) to heat treatment according to a known method, for example, boil heat treatment, or steam heat treatment. In the present invention, the pregelatinized noodle also includes a noodle in which starch contained in the noodle is pregelatinized partially.

In the pregelatinized noodle, the degree of pregelatinization can be evaluated on the moisture value of the pregelatinized noodle.

In the present invention, the moisture value of the noodle can be measured using the heat drying type moisture meter ("ML50," manufactured by A&D Company, setting: standard MID; setting temperature: 200°C), as described in Examples below. Specifically, the noodle string is cut within 10 mm pieces and measured as a 5 g sample.

The moisture value of the pregelatinized noodle can be appropriately set according to the type, shape, thickness, or other properties of the noodle, and for example, it is preferably 45% by mass to 63% by mass, more preferably 48% by mass to 60% by mass, and still more preferably 55% by mass to 58% by mass. If the moisture value of the pregelatinized noodle is excessively low, there is a risk that the noodle strings will stick together and form lumps during the subsequent heat sterilization treatment step. On the other hand, if the moisture value of the pregelatinized noodle is excessively high, the pregelatinized noodle may have a risk of not maintaining appropriate firmness. The moisture value of the pregelatinized noodle is preferably 80% to 130% relative to the moisture value (% by mass) of the packaged noodle (the noodle obtained after the heat sterilization treatment step), more preferably 85% to 120%, and still more preferably 88% to 117%.

The moisture value of the pregelatinized noodle can be adjusted according to heat treatment parameters such as time and temperature.

In the pregelatinized noodle preparation step, the pregelatinized noodle may be obtained by subjecting a non-pregelatinized noodle (a dried, semi-dried or fresh noodle) to heat treatment, or a commercially available chilled or frozen noodle may be used.

The conditions for the heat treatment of the non-pregelatinized noodle can be appropriately set according to the type, shape, thickness, or other properties of the noodle. For example, the boiling and heating temperature is preferably 80°C to 100°C, and the boiling and heating time is preferably 1 minute to 10 minutes, and more preferably 1 minute to 5 minutes. In addition, for example, the steaming and heating temperature is preferably 80°C to 100°C, and the steaming and heating time is preferably 15 minutes to 100 minutes, and more preferably 30 minutes to 60 minutes.

The heat treatment method for a non-pregelatinized noodle can employ a method normally used in food production.

The term "non-pregelatinized noodle" refers a noodle in which heat treatment has not undergone and starch contained in the noodle has not been pregelatinized. The non-pregelatinized noodle can be any noodles obtained by forming dough made from grain flour as a raw material. Examples of the non-pregelatinized noodle include Chinese noodle, *udon* (Japanese thin wheat noodle), pasta, *somen* (Japanese thin wheat noodle) and any other noodles. Wheat is preferably used, and more preferably used at 50% by mass or more, as a raw material of the noodle. In addition, the non-pregelatinized noodle used may be any one of dried, semi-dried and fresh noodles.

The thickness of the non-pregelatinized noodle varies depending on the type of the noodle. For example, the thickness is around 1.5 mm to 3 mm for Chinese noodle, around 1.8 mm to 4.5 mm for *udon,* around 1.4 mm to 2.3 mm for pasta (spaghetti), and around 0.5 mm to 1.3 mm for *somen.*

A moisture value of the non-pregelatinized noodle is generally around 30% by mass to 40% by mass for fresh noodles, and around 10% by mass to 15% by mass for dried noodles.

When heat treating a non-pregelatinized noodle to obtain a pregelatinized noodle in the pregelatinized noodle preparation step, the pregelatinized noodle is preferably rinsed with water and drained after the heat treatment. For rinsing and draining methods, those normally used in food production can be employed. The method includes, for example, rinsing under running water for 5 seconds to 60 seconds and draining using a punching bowl or other such tools.

In case of using a frozen noodle as the pregelatinized noodle in the pregelatinized noodle preparation step, the frozen noodle is preferably thawed (preferably naturally thawed) before use.

According to the pregelatinized noodle preparation step, a noodle pregelatinized to a certain degree is used so that the noodle strings are prevented from sticking together and forming lumps during the subsequent heat sterilization treatment step.

### [Immersion treatment step]

In the immersion treatment step, it is achieved to obtain an immersion liquid-absorbed noodle by subjecting the pregelatinized noodle prepared in the previous step to immersion treatment using an immersion liquid containing a starch degradation product with a DE value of 4 to 25 at a concentration of 20% by mass to 50% by mass, and then subjecting to solid-liquid separation treatment.

The immersion liquid contains a starch degradation product with a DE value of 4 to 25 at a concentration of 20% by mass to 50% by mass. Specifically, the immersion liquid is composed of a starch degradation product with a DE value of 4 to 25 at a concentration of 20% by mass to 50% by mass and other materials at a concentration of 50% by mass to 80% by mass. The other materials include water, and optionally, salt, vinegar, and acidifier such as citric acid. The at least one material selected from the group consisting of salt and acidifier is preferably contained at a ratio of 0.1% by mass to 15% by mass relative to the immersion liquid to the extent that it does not interfere with the taste of seasoning materials such as liquid seasonings (including sauce, soup, dipping sauce, and any other seasonings) and ingredients when consumed.

Depending on the DE value and content of the starch degradation product used, the sweet taste may become stronger. In this case, salt that can be contained in the immersion liquid may be used for reducing the sweet taste. As for the acidifier that can be contained in the immersion liquid, it may be used to adjust pH and prevent discoloration when the noodle used is a brine-containing Chinese noodle.

As mentioned above, the immersion liquid preferably does not contain the following materials: seasonings (soy sauce, miso, sugar, and any other seasonings) except the starch degradation product, and salt and acidifier as optional materials, yeast extract, meat extract (chicken extract, pork extract, beef extract, fish extract, etc.), fruit juice (apple juice, etc.), vegetable juice (tomato puree, etc.), spices (ginger, chili pepper, pepper, basil, oregano, etc.), coloring agents, flavor enhancers, and seasoning agents such as flavors. If contained, they are in very small amounts (e.g., 0.1% by mass to 1% by mass).

The starch degradation product is a starch degradation product with a DE value of 4 to 25, and can be used without particular limitations as long as it can be used in general for foods.

The term "starch degradation product" is a general term for products obtained by degrading starch to an adequate level of molecular weight using an enzyme and/or an acid. Specifically, examples of the starch degradation product with a DE value of 4 to 25 include dextrin with a DE value of 4 to 10, maltodextrin with a DE value of 10 to 20, and powdered corn syrup with a DE value of 20 to 25. Further, the starch degradation product with a DE value of 4 to 25 can be used alone or in combination of two or more.

The starch degradation product has a DE value of 4 to 25, preferably a DE value of 8 to 18. As the DE value of the starch degradation product is smaller, the sweetness is lower, and the viscosity is higher. As the DE value of the starch degradation product is greater, the sweetness is higher, and the viscosity is lower. Therefore, when a starch degradation product with a DE value less than 4 is used, the viscosity of the starch degradation product is higher, and thus the viscosity of the immersion liquid as a whole is also higher, causing poor covering or surrounding of the immersion liquid around the pregelatinized noodle strings. On the other hand, when a starch degradation product with a DE value more than 25 is used, the sweetness of the starch degradation product is higher, and thus the sweetness of the immersion liquid as a whole is also increased, and as a result, the taste of the resulting packaged noodle may be impaired.

The starch degradation product with a DE value of 4 to 25 is contained at a concentration of 20% by mass to 50% by mass in the immersion liquid, preferably 25% by mass to 40% by mass. When the content of the starch degradation product is less than 20% by mass, the starch degradation product may not be absorbed into the pregelatinized noodle strings in an appropriate amount during the immersion treatment, and as a result, the noodle strings may have a risk of not maintaining appropriate firmness. On the other hand, when the content of the starch degradation product is more than 50% by mass, the viscosity of the immersion liquid as a whole is increased, causing poor covering or surrounding of the immersion liquid around the pregelatinized noodle strings.

The Brix value of the immersion liquid is preferably between 20 and 50, and more preferably between 27 and 43. If the Brix value is excessively low, the starch degradation product may not be absorbed into the pregelatinized noodle strings in an appropriate amount, and as a result, the noodle strings may have a risk of not maintaining appropriate firmness. On the other hand, if the Brix value is excessively high, the viscosity of the immersion liquid as a whole is increased, causing poor covering or surrounding of the immersion liquid around the pregelatinized noodle strings.

It is assumed that a portion of dextrin in the immersion liquid penetrates into the inside of the noodle strings, so that the Brix value of the immersion liquid becomes lower than 20 to 50 after the immersion treatment. In light of Examples described below, the immersion liquid has a Brix of about 18 to 43 after the immersion treatment.

In the present invention, the Brix value refers to the indication of a refractometer for sugar at a sample temperature of 20°C.

The Brix value can be adjusted according to the content of the starch degradation product in the immersion liquid.

For example, if 10 g of dextrin is dissolved in 100 g of water, the Brix value will be around 9.5 to 10. Therefore, it can be said that even if materials other than the starch degradation product are contained in the water in the immersion liquid, they are in very small amounts.

The method for preparing the immersion liquid is not particularly limited, and the immersion liquid can be prepared by weighing and mixing the starch degradation product with a DE value of 4 to 25, water, and optionally salt, acidifier and other material, and heating the mixture if necessary.

The immersion treatment method is not particularly limited, and includes, for example, putting the pregelatinized noodle in a container filled with the immersion liquid, and allowing them to leave to stand.

The ratio of pregelatinized noodle added to immersion liquid is not particularly limited as long as the pregelatinized noodle is sufficiently immersed in the immersion liquid. The mass ratio (pregelatinized noodle : immersion liquid) is, for example, preferably 1:0.5 to 1:10, and more preferably 1:0.5 to 1:1.5.

The immersion treatment conditions can be appropriately set according to the type, shape, thickness or other properties of the noodle, and the immersing time is, for example, preferably from 10 minutes to 24 hours, more preferably from 30 minutes to 15 hours, and still more preferably from 30 minutes to 3 hours, and the immersion liquid temperature is, for example, preferably from 1°C to 30°C, and more preferably from 5°C to 10°C.

As for the method for the solid-liquid separation treatment, those normally used in food production can be employed, and, for example, a method including draining the immersion liquid-absorbed noodle using a centrifugal dehydrator or a punching bowl is included.

The solid-liquid separation treatment conditions can be appropriately set according to the type, shape, thickness, or other properties of the noodle. The solid-liquid separation time is, for example, preferably from 5 minutes to 60 minutes, and more preferably from 8 minutes to 20 minutes.

A moisture value of the pregelatinized noodle after the solid-liquid separation treatment step, i.e., A moisture value of the immersion liquid-absorbed noodle, is, for example, preferably 45% by mass to 63% by mass, more preferably 48% by mass to 60% by mass, and still more preferably 55% by mass to 58% by mass. If a moisture value of the immersion liquid-absorbed noodle is excessively low, the noodle strings may have a risk of sticking together and forming lumps during the subsequent heat sterilization treatment step. On the other hand, if a moisture value of the immersion liquid-absorbed noodle is excessively high, the noodle strings themselves may become bloated, causing a risk of impairing the texture.

A moisture value of the immersion liquid-absorbed noodle is preferably equivalent to a moisture value (% by mass) of the packaged noodle (the noodle obtained after the heat sterilization treatment step).

A moisture value of the immersion liquid-absorbed noodle can be adjusted according to, for example, the time of immersion treatment, or the temperature or moisture ratio of the immersion liquid.

In the immersion treatment step, the immersion treatment results in the immersion liquid to be absorbed from the surface of the pregelatinized noodle by immersing the noodle in the immersion liquid, and the starch degradation product in the immersion liquid penetrates into the inside of the noodle strings, allowing to keep the water retention ability in the inside of the noodle strings during the subsequent heat sterilization treatment step. The solid-liquid separation treatment results in excess moisture on the noodle surface to be removed by draining the immersion liquid from the immersion liquid-absorbed noodle, eliminating as much water capable of migrating into the noodle strings as possible during the subsequent heat sterilization treatment step.

### [Heat sterilization treatment step]

In the heat sterilization treatment step, the packaged noodle is obtained by subjecting a container filled with the immersion liquid-absorbed noodle to heat sterilization treatment.

In the heat sterilization treatment step, the immersion liquid-absorbed noodle is filled in a container, but preferably no other materials (ingredients, seasonings, or any other materials) are filled in the container, or if they are, they are in very small amounts. Other materials are those that do not interfere with the tastes of the noodle, and/or liquid seasonings (including sauce, soup, dipping sauce, and any other seasonings) and/or ingredients to be combined at the time of consuming. Examples of other materials include oils and emulsifiers. The amount of other materials added is, for example, 0.1% by mass to 1.0% by mass relative to the immersion liquid-absorbed noodle.

As for the method for the heat sterilization treatment, those normally used in food production may be employed. Specifically, the immersion liquid-absorbed noodle is filled into a predefined container, and the container is sealed, and subjected to heat sterilization treatment.

The heat sterilization treatment conditions can be appropriately set according to the type of noodle, the filled amount, the type of container, etc. For example, when the heat sterilization treatment is retort sterilization treatment, it is performed under pressure at 100°C to 130°C, preferably about 125°C, for 6 minutes to 15 minutes, preferably 6 minutes to 9 minutes. An F value, an index of sterilization strength, is 4 or more, preferably 5 to 10. Known devices and methods for retort sterilization treatment can be used.

The container used in the heat sterilization treatment is not particularly limited as long as it is made of materials and made from shapes that can withstand the heat sterilization treatment and can be sealed. Examples of the container include packaging containers such as pouches, sachets, bottles, trays, cans, and bottles made of, for example, metals such as aluminum, plastics such as PET and PTP, one-layer or stacked-layer (laminated) films, glasses, and the like. In particular, when a retortable container is used, specifically, examples of the containers include a container manufactured using stacked-layer (laminated) film provided with a heat-weldable resin layer made of olefin resins such as polypropylene and polyethylene on its inner side, and provided with a layer made of, for example, resins having a high gas barrier property such as polyester or polyamide and/or aluminum foil on its outer side.

A moisture value of the noodle strings of the packaged noodle is, for example, preferably between 45% by mass and 63% by mass, more preferably between 48% by mass and 60% by mass, and still more preferably between 55% by mass and 58% by mass.

The method of producing the packaged noodle of the present invention does not preclude incorporating any other steps before or after the respective steps of pregelatinized noodle preparation step, immersion treatment step, and heat sterilization treatment step to the extent that the purpose of the invention can be achieved.

As described above, the method of producing the packaged noodle according to one embodiment of the present invention provides a packaged noodle that maintains appropriate firmness even after long-term storage, and simultaneously has high versatility. The reason this effect is obtained might not be obvious, but it is assumed to be based on the following principle. It should be noted that such principle does not unduly limit the technical scope of the present invention. That is, the immersion treatment step using the immersion liquid containing the specific amount of starch degradation product with the specific DE value causes the immersion liquid to be absorbed and penetrate into the inside of the noodle strings, resulting in that the starch degradation product having water retention ability is distributed uniformly in the inside of the noodle strings. Thus, it is considered that excess water migration is prevented during the heat sterilization treatment step, and as a result, the noodle strings can maintain their appropriate firmness. In addition, according to the method of producing the packaged noodle according to one embodiment of the present invention, the packaged noodle has almost no seasoning materials other than the starch degradation product, and is substantially unseasoned, so that liquid seasonings (including sauce, soup, dipping sauce and any other seasonings) and ingredients can be freely selected relative to the packaged noodle. This makes the packaged noodle meet the needs of consumers and have high versatility.

The packaged noodle according to one embodiment of the present invention can be stored at room temperature for an extended period of time. In particular, even when retort sterilization treatment is employed as the heat sterilization treatment, the packaged noodle according to one embodiment of the present invention can maintain appropriate firmness of the noodle strings. Therefore, the packaged noodle can be stored for a longer period of time than a packaged noodle obtained by subjecting to low-temperature pasteurization treatment. In addition, according to the packaged noodle of one embodiment of the present invention, seasoning materials, and/or ingredients other than the starch degradation product are removed as much as possible from the packaged noodle. Therefore, the packaged noodle can be stored for a longer period of time than, for example, the packaged noodle as described in Patent Document 1. The storage period can range, for example, from 8 months to 6 years.

The method of seasoning or cooking using the packaged noodle according to one embodiment of the present invention is not particularly limited. For example, the method for seasoning or cooking the packaged noodle includes heating the packaged noodle in hot water (water-bath) or in a microwave oven, and combining the noodle with a liquid seasoning (including sauce, soup, dipping sauce, or any other seasoning) which is prepared in advance.

Hereinafter, the present invention will be described in more detail with reference to Examples, but the present invention is not limited to these Examples, and the present invention can take various forms as long as the problems of the present invention can be solved.

### Examples

### [1. Production of packaged noodle (pasta)]

### 1-1. Preparation of pregelatinized noodle

One hundred grams of the dried pasta ("Spaghetti Golden 1.6 mm," manufactured by Hagoromo Foods Corporation, moisture value 11.8% by mass (measured value), noodle thickness 1.6 mm) as the non-pregelatinized noodle was put into boiling water, and boiled and heated for 5 minutes while stirring to separate the strings, and then lightly rinsed with water and drained. As such, the pregelatinized noodle was obtained in an amount of 198 g.

### 1-2. Preparation of immersion liquid

Dextrins with DE values of 4, 8, 25, and 40 were each added to water at concentrations of 15% by mass, 20% by mass, 25% by mass, 30% by mass, 40% by mass, 50% by mass, and 60% by mass, respectively, to prepare the immersion liquid.

The following is a list of the dextrins used.
Dextrin with a DE value of 4: "Pindex#100," manufactured by Matsutani Chemical Industry.
Dextrin with a DE value of 8: "Pindex #1," manufactured by Matsutani Chemical Industry.
Dextrin with a DE value of 25: "Pindex #3," manufactured by Matsutani Chemical Industry.
Dextrin with a DE value of 40: "Pindex #6," manufactured by Matsutani Chemical Industry.

### 1-3. Immersion treatment and solid-liquid separation treatment

The pregelatinized noodle after boiling and heating and then draining was subjected to immersion treatment using each immersion liquid (at 0°C to 20°C) for 4 hours, and then left to stand to drain the immersion liquid for 10 minutes (solid-liquid separation treatment) using a punching bowl. As such, the immersion liquid-absorbed noodle was obtained.

### 1-4. Heat sterilization treatment

One hundred grams of the immersion liquid-absorbed noodle was filled into the retortable container ("retortable bag," 130 mm x 170 mm, manufactured by TOPPAN Inc.), the opening of the retortable container was sealed using the vacuum packaging machine ("Kashiwagi vacuum packaging machine," manufactured by NPC Incorporated), and the container was subjected to heat sterilization treatment using the spray-type retort sterilizer (manufactured by HISAKA WORKS, LTD.) to produce the packaged noodle A. The pressured heat sterilization conditions were set at 125°C with a maximum pressure of 0.25 MPa. After the temperature inside the equipment reached 125°C, its heating time was for 6 minutes with an F value of 6.5.

### [2. Measurement and evaluation]

### 2-1. Measurement of breaking strength

The breaking strength (unit: N (Newton)) of each sample was measured using the rheometer CR-500DX (plunger used; No. 10 (for shear force)) manufactured by SUN SCIENTIFIC. The measurement was performed five times, and the average value was calculated.

Specifically, the packaged noodle A produced in the section 1 above was stored at room temperature for 2 weeks, then put into boiling water for 10 minutes, and the noodle string was cut into about 30 mm pieces immediately after the container was opened. The cut noodle piece was measured as a sample. The results are shown in Table 1.

As a comparison sample, the normally heat-treated noodle a was prepared by putting a dried pasta identical with the dried pasta used in the section 1 above into boiling water, and boiling and heating for 7 minutes while stirring to separate the strings. The normally heat-treated noodle a was drained, and cut into about 30 mm pieces for the measurement. The measurement result was 0.335.

For the evaluation in Table 1, the values of breaking strength smaller than "the value of breaking strength of the normally heat-treated noodle - 0.05" were assigned a score of "0", the values of breaking strength greater than "the value of breaking strength of the normally heat-treated noodle + 0.15" were assigned a score of "1", and the values of breaking strength between "the value of breaking strength of the normally heat-treated noodle - 0.05" and "the value of breaking strength of the normally heat-treated noodle + 0.15" were assigned a score of "2".

### 2-2. Measurement of moisture value

The moisture value (% by mass) of each sample was measured using the heat and dry moisture meter ("ML50," manufactured by A&D Company; setting: standard MID; setting temperature: 200°C). The measurement was performed three times, and the average value was calculated.

Specifically, the packaged noodle A produced in the section 1 above was stored at room temperature for 2 weeks, and then the noodle string was cut into within 10 mm pieces immediately after opening the container, and 5 g of the cut noodle piece was measured as a sample. The results are shown in Table 1.

### 2-3. Measurement of Brix value

The Brix value of each sample at a temperature of 20°C was measured using the hand-held refractometer "MASTER-TH50" (manufactured by AS ONE CORPORATION) (measuring range 0 to 50) as a Brix meter. The measurement was performed three times, and the average value was calculated.

In the present invention, in case that it is impossible to visually check the scale of the above hand-held refractometer depending on the state of the sample, the digital display pocket sugar meter "MASTER-80H" (manufactured by ATAGO) (measuring range 30 to 80) was used for the measurement.

Specifically, the Brix values of the immersion liquid before and after immersion in the step of "1-3. immersion treatment" above were measured. The results are shown in Table 1.

### 2-4. Sensory evaluation

The packaged noodle A was stored at room temperature for two weeks, and then put into boiling water for 10 minutes, and the noodle immediately after opening the container was evaluated by three panelists with discriminating ability, according to the following evaluation criteria. The average scores for each item are shown in Table 1.

### <Browning>

score of "2": No browning
score of "1": Partial browning
score of "0": Browning

### <Separation>

score of "2": Easy to separate
score of "1": Slightly difficult to separate
score of "0": Difficult to separate

### <Sweet taste>

score of "2": No sweet taste
score of "1": Slightly sweet
score of "0": Sweet and unpleasant

Besides, these scores were added with the score of breaking strength measured in the section 2-1 above to calculate the overall score. Scores of 6 or more out of 8 were considered acceptable.

Additionally, the weights (in grams (g)) of the non-pregelatinized noodle (labeled as "before boiling"), pregelatinized noodle (labeled as "before immersing"), and immersion liquid-absorbed noodle (labeled as "after immersing") are shown in Table 1.

**[Table 1]**

| Packaged noodle No. | Dextrin | | Weight (g) | | | Yield | Brix value | | Moisture value (wt%) | Sensory evaluation | | | Breaking strength | | Overall score |
|---|---|---|---|---|---|---|---|---|---|---|---|---|---|---|---|
| | DE value | Conc. (wt%) | Before boiling | Before immer sing | After immer sing | | Before immersing (immersion liquid) | After immersing (immersion liquid) | | Brow ning | Separa tion | Sweet taste | (N) | Sc ore | |
| A-1a | 4 | 60 | Not measurable (due to high viscosity) | | | | | | | | | | | | - |
| A-1b | | 50 | 100 | 198 | 218 | 218% | 50 | 43 | 49.5% | 2 | 2 | 2 | 0.486 | 1 | 7 |
| A-1c | | 40 | 100 | | 219 | 219% | 40 | 36 | 54.1% | 2 | 2 | 2 | 0.449 | 2 | 8 |
| A-1d | | 30 | 100 | | 234 | 234% | 30 | 30 | 58.6% | 2 | 2 | 2 | 0.335 | 2 | 8 |
| A-1e | | 25 | 100 | | 248 | 248% | 25 | 25 | 60.5% | 2 | 1.67 | 2 | 0.329 | 2 | 7.67 |
| A-1f | | 20 | 100 | | 255 | 255% | 20 | 21 | 62.8% | 2 | 1.33 | 2 | 0.305 | 2 | 7.33 |
| A-1g | | 15 | 100 | | 265 | 258% | 15 | 18 | 64.6% | 2 | 1 | 2 | 0.280 | 0 | 5 |
| A-2a | 8 | 60 | Not measurable (due to high viscosity) | | | | | | | | | | | | - |
| A-2b | | 50 | 100 | 198 | 205 | 205% | 50 | 41 | 47.5% | 2 | 2 | 2 | 0.513 | 1 | 7 |
| A-2c | | 40 | 100 | | 224 | 224% | 40 | 34 | 52.6% | 2 | 2 | 2 | 0.429 | 2 | 8 |
| A-2d | | 30 | 100 | | 244 | 244% | 30 | 28 | 57.0% | 2 | 2 | 2 | 0.338 | 2 | 8 |
| A-2e | | 25 | 100 | | 253 | 253% | 25 | 23.5 | 60.1% | 2 | 2 | 2 | 0.323 | 2 | 8 |
| A-2f | | 20 | 100 | | 258 | 258% | 20 | 19.5 | 62.5% | 1.67 | 1.67 | 2 | 0.297 | 2 | 7.34 |
| A-2g | | 15 | 100 | | 263 | 263% | 15 | 16 | 64.9% | 1.67 | 1.33 | 2 | 0.275 | 0 | 5 |
| A-3a | 25 | 60 | 100 | 198 | 208 | 208% | 60 | 45 | 45.2% | 1 | 2 | 0.67 | 0.525 | 1 | 4.67 |
| A-3b | | 50 | 100 | | 229 | 229% | 50 | 37 | 49.2% | 1 | 1.67 | 1.67 | 0.464 | 2 | 6.34 |
| A-3c | | 40 | 100 | | 248 | 248% | 40 | 30.5 | 53.2% | 1 | 1.67 | 1.67 | 0.388 | 2 | 6.34 |
| A-3d | | 30 | 100 | | 265 | 265% | 30 | 24 | 57.9% | 1.33 | 1.67 | 1.67 | 0.325 | 2 | 6.67 |
| A-3e | | 25 | 100 | | 273 | 273% | 25 | 21 | 60.5% | 1.67 | 1.67 | 2 | 0.312 | 2 | 7.34 |
| A-3f | | 20 | 100 | | 279 | 279% | 20 | 18 | 62.4% | 1.67 | 1.33 | 2 | 0.289 | 2 | 7 |
| A-3g | | 15 | 100 | | 292 | 292% | 15 | 15 | 64.5% | 2 | 1.33 | 2 | 0.272 | 0 | 5.33 |
| A-4a | 40 | 60 | 100 | 198 | 205 | 205% | 60 | 44.5 | 44.2% | 0 | 1 | 0 | 0.533 | 1 | 2 |
| A-4b | | 50 | 100 | | 229 | 229% | 50 | 36 | 48.2% | 0 | 1 | 0 | 0.496 | 1 | 2 |
| A-4c | | 40 | 100 | | 255 | 255% | 40 | 29.5 | 53.2% | 1 | 0.67 | 0 | 0.357 | 2 | 3.67 |
| A-4d | | 30 | 100 | | 268 | 268% | 30 | 23 | 57.4% | 1.67 | 0 | 1 | 0.303 | 2 | 4.67 |
| A-4e | | 25 | 100 | | 275 | 275% | 25 | 20 | 59.9% | 1.67 | 0 | 1.67 | 0.290 | 2 | 5.34 |
| A-4f | | 20 | 100 | | 280 | 280% | 20 | 17.5 | 62.0% | 2 | 0 | 2 | 0.273 | 0 | 4 |
| A-4g | | 15 | 100 | | 294 | 294% | 15 | 15 | 64.5% | 2 | 0 | 2 | 0.265 | 0 | 4 |
| Normally heat-treated noodle a | | | | | | | | | | | | | 0.335 | | |

As the results shown in Table 1, it was found that in the examples in which immersion treatment was performed using the immersion liquid containing dextrin with a DE value of 4 to 25 at 20% by mass to 50% by mass (the packaged noodles A-1b to A-1f, A-2b to A-2f, and A-3b to A-3f), the breaking strength was equivalent to that of normally heat-treated noodle a, with no browning, favorable separation, and no sweet taste.

On the other hand, in the examples in which immersion treatment was performed using the immersion liquid containing dextrin with a DE value of 4 to 8 at 60% by mass (the packaged noodles A-1a and A-2a), the viscosity of the immersion liquid became too high to produce the packaged noodle.

In addition, in the examples in which immersion treatment was performed using the immersion liquid containing dextrin with a DE value of 8 to 25 at 15% by mass (the packaged noodles A-2g and A-3g), the breaking strength was not sufficient level.

Furthermore, in the examples in which immersion treatment was performed using the immersion liquid containing dextrin with a DE value of 40 at 40% by mass or more (the packaged noodles A-4a to A-4c), the sweet taste was stronger and browning also occurred due to the Maillard reaction of dextrin. In the examples in which immersion treatment was performed using the immersion liquid containing dextrin with a DE value of 40 at 15% by mass to 20% by mass (the packaged noodles A-4f to A-4g), the breaking strength was not sufficient level. In the examples in which immersion treatment was performed using the immersion liquid containing dextrin with a DE value of 40 at 15% by mass to 30% by mass (the packaged noodles A-4d to A-4g), the separation was unfavorable. This is thought to be because the DE value of dextrin is excessively high, this means the molecular weight of dextrin is smaller, and the viscosity is also reduced. Therefore, the degree of penetration of dextrin into the noodle strings could become excessive, causing lack of coating of dextrin on the surface of noodle strings. The pregelatinization (heat sterilization treatment) of the noodle is conducted without such coating, causing the noodle strings being in contact with each other to stick together, and to become difficult to separate.

### [3. Production, measurement, and evaluation of packaged noodle (Chinese noodle)]

### 3-1. Preparation of pregelatinized noodle

Into boiling water, 605 g of the fresh Chinese noodle ("No. 1584," manufactured by Nishiyama Seimen, moisture value 32.9% by mass (measured value), noodle thickness 1.4 to 2.5 mm) as the non-pregelatinized noodle was put, and boiled and heated for 1 minute while stirring to separate the strings, and then lightly rinsed with water and drained. As such, the pregelatinized noodle was obtained in an amount of 856 g.

### 3-2. Preparation of immersion liquid

The immersion liquid was prepared with water at 40% by mass, salt at 2% by mass, fermented vinegar at 10% by mass, and dextrin with a DE value of 8 ("Pinedex #1," Matsutani Chemical Industry) at 40% by mass.

### 3-3. Immersion treatment and solid-liquid separation treatment

The pregelatinized noodle after boiling and heating and then draining was subjected to immersion treatment using the immersion liquid (at 0°C to 20°C) for 3 hours, and then left to stand to drain the immersion liquid for 10 minutes using a punching bowl (solid-liquid separation treatment). As such, the immersion liquid-absorbed noodle was obtained in an amount of 993 g.

### 3-4. Heat sterilization treatment

Two hundreds grams of the immersion liquid-absorbed noodle was filled into the retortable container ("Retortable Bag," 150 mm x 200 mm, manufactured by TOPPAN Inc.), the opening of the retortable container was sealed using the vacuum packaging machine ("Kashiwagi vacuum packaging machine," manufactured by NPC Incorporated), and the container was subjected to heat sterilization treatment using the spray-type retort sterilizer (manufactured by HISAKA WORKS, LTD.) to produce the packaged noodle B. The pressured heat sterilization conditions were set at 125°C with a maximum pressure of 0.25 MPa. After the temperature inside the equipment reached 125°C, its heating time was for 6 minutes with an F value of 6.8.

### 3-5. Measurement of breaking strength

The breaking strength of the packaged noodle B was measured in the same manner as the measurement method described in the section 2-1 above. The results are shown in Table 2.

As a comparison sample, the normally heat-treated noodle b was prepared by putting a fresh Chinese noodle identical with that used in the section 3-1 above into boiling water, and boiling and heating for 2 minutes while stirring to separate the strings. The normally heat-treated noodle b was drained, and cut into about 30 mm pieces for the measurement. The measurement result was 0.459.

### 3-6. Measurement of moisture value

The moisture value of the noodle strings of the packaged noodle B was measured in the same manner as the measurement method described in the section 2-2 above. The results are shown in Table 2.

### 3-7. Measurement of Brix value

The Brix values of the immersion liquid before and after immersion in the step of "3-3. immersion treatment" were measured in the same manner as the measurement method described in the section 2-3 above. The results are shown in Table 2.

### 3-8. Sensory evaluation

Sensory evaluation of the packaged noodle B was conducted in the same manner as the evaluation method described in the section 2-4 above. The results are shown in Table 2.

Additionally, the weights (g) of the non-pregelatinized noodle (labeled as "before boiling"), pregelatinized noodle (labeled as "before immersing"), and immersion liquid-absorbed noodle (labeled as "after immersing") are shown in Table 2.

**[Table 2]**

| Packaged noodle No. | Dextrin | | Weight (g) | | | Yield | Brix value | | Moisture value (wt%) | Sensory evaluation | | | Breaking strength | | Overall score |
|---|---|---|---|---|---|---|---|---|---|---|---|---|---|---|---|
| | DE value | Conc. (wt%) | Before boiling | Before immer sing | After immer sing | | Before immersing (immersion liquid) | After immersing (immersion liquid) | | Brow ning | Separa tion | Sweet taste | (N) | Sc ore | |
| B | 8 | 40 | 605 | 856 | 993 | 164.1% | 42.5 | 37 | 52.4% | 1.67 | 2 | 2 | 0.418 | 2 | 7.67 |
| Normally heat-treated noodle b | | | | | | | | | | | | | 0.459 | | |

### [4. Production, measurement, and evaluation of packaged noodle (somen)]

### 4-1. Preparation of pregelatinized noodle

Into boiling water, 254 g of the dried *somen* ("Hand-pulled *somen* Ibonoito (high grade)," Hyogo Prefecture Tenobe Somen Cooperative Association, moisture value 13.2% by mass (measured value), noodle thickness 0.7 mm to 0.9 mm) as the non-pregelatinized noodle was put, and boiled and heated for 1 minute while stirring to separate the strings, and then lightly rinsed with water and drained. As such, the pregelatinized noodle was obtained in an amount of 600 g.

### 4-2. Preparation of immersion liquid

The immersion liquid was prepared with water at 48% by mass, fermented vinegar at 2% by mass, and dextrin with a DE value of 8 ("Pinedex #1," Matsutani Chemical Industry) at 50% by mass.

### 4-3. Immersion treatment and solid-liquid separation treatment

The pregelatinized noodle after boiling and heating and then draining was subjected to immersion treatment using the immersion liquid (at 0°C to 20°C) for 30 minutes, and then left to stand to drain the immersion liquid for 10 minutes using a punching bowl (solid-liquid separation treatment). As such, the immersion liquid-absorbed noodle was obtained in an amount of 618 g.

### 4-4. Heat sterilization treatment

One hundred grams of the immersion liquid-absorbed noodle was filled into the retortable container ("retortable bag," 130 mm x 170 mm, manufactured by TOPPAN Inc.), the opening of the retortable container was sealed using the vacuum packaging machine ("Kashiwagi vacuum packaging machine," manufactured by NPC Incorporated), and the container was subjected to heat sterilization treatment using the spray-type retort sterilizer (manufactured by HISAKA WORKS, LTD.) to produce the packaged noodle C. The pressured heat sterilization conditions were set at 125°C with a maximum pressure of 0.25 MPa. After the temperature inside the equipment reached 125°C, its heating time was for 6 minutes with an F value of 6.8.

### 4-5. Measurement of breaking strength

The breaking strength of the packaged noodle C was measured in the same manner as the measurement method described in the section 2-1 above, except that the packaged noodle C was stored at room temperature for 2 weeks, then put into boiling water for 10 minutes, and after opening the container, the noodle was rinsed under running water for 30 seconds and drained. The results are shown in Table 3.

As a comparison sample, the normally heat-treated noodle c was prepared by putting a dried *somen* identical with that used in the section 4-1 above into boiling water, and boiling and heating for 1 minute and 30 seconds while stirring to separate the strings, and rinsing the noodle under running water for 30 seconds. The normally heat-treated noodle c was drained, and cut into about 30 mm pieces for the measurement. The measurement result was 0.12.

### 4-6. Measurement of moisture value

The moisture value of the noodle strings of the packaged noodle C was measured in the same manner as the measurement method described in the section 2-2 above. The results are shown in Table 3.

### 4-7. Measurement of Brix value

The Brix values of the immersion liquid before and after immersion in the step of "4-3. immersion treatment" were measured in the same manner as the measurement method described in the section 2-3 above. The results are shown in Table 3.

### 4-8. Sensory evaluation

Sensory evaluation for the packaged noodle C was conducted in the same manner as the evaluation method described in the section 2-4 above. The results are shown in Table 3.

Additionally, the weights (g) of the non-pregelatinized noodle (labeled as "before boiling"), pregelatinized noodle (labeled as "before immersing"), and immersion liquid-absorbed noodle (labeled as "after immersing") are shown in Table 3.

**[Table 3]**

| Packaged noodle No. | Dextrin | | Weight (g) | | | Yield | Brix value | | Moisture value (wt%) | Sensory evaluation | | | Breaking strength | | Overall score |
|---|---|---|---|---|---|---|---|---|---|---|---|---|---|---|---|
| | DE value | Conc. (wt%) | Before boiling | Before immer sing | After immer sing | | Before immersing (immersion liquid) | After immersing (immersion liquid) | | Brow ning | Separa tion | Sweet taste | (N) | Sc ore | |
| c | 8 | 40 | 254 | 600 | 618 | 243.3% | 50 | 39 | 52.9% | 1.67 | 2 | 2 | 0.126 | 2 | 7.67 |
| Normally heat-treated noodle c | | | | | | | | | | | | | 0.12 | | |

### [5. Production, measurement, and evaluation of packaged noodle (udon)]

### 5-1. Preparation of pregelatinized noodle

The frozen *udon* ("Men Ippon Udon," manufactured by TAKARA FOODS, moisture value 67.4% by mass (measured value), noodle thickness 3.0 mm (specification sheet), cutting edge No. 8) 1312 g was thawed naturally. As such, the pregelatinized noodle was obtained in an amount of 1312 g.

### 5-2. Preparation of immersion liquid

The immersion liquid was prepared with water at 58% by mass, salt at 2% by mass, and dextrin with a DE value of 8 ("Pindex #1," manufactured by Matsutani Chemical Industry) at 40% by mass.

### 5-3. Immersion treatment and solid-liquid separation treatment

The pregelatinized noodle was subjected to immersion treatment using the immersion liquid (at 0°C to 20°C) for 2 hours and 30 minutes, and then left to stand to drain the immersion liquid using a punching bowl for 10 minutes (solid-liquid separation treatment). As such, the immersion liquid-absorbed noodle was obtained in an amount of 1283 g.

### 5-4. Heat sterilization treatment

One hundred grams of the immersion liquid-absorbed noodle was filled into the retortable container ("retortable bag," 130 mm x 170 mm, manufactured by TOPPAN Inc.), the opening of the retortable container was sealed using the vacuum packaging machine ("Kashiwagi vacuum packaging machine," manufactured by NPC Incorporated), and the container was subjected to heat sterilization treatment using the spray-type retort sterilizer (manufactured by HISAKA WORKS, LTD.) to produce the packaged noodle D. The pressured heat sterilization conditions were set at 125°C with a maximum pressure of 0.25 MPa. After the temperature inside the equipment reached 125°C, its heating time was for 6 minutes with an F value of 7.

### 5-5. Measurement of breaking strength

The breaking strength of the packaged noodle D was measured in the same manner as the measurement method described in the section 2-1 above. The results are shown in Table 4.

As a comparison sample, the normally heat-treated noodle d was prepared by putting a frozen *udon* identical with that used in the section 5-1 above which was still frozen into boiling water, and boiling and heating for 1 minute while stirring to separate the strings. The normally heat-treated noodle d was drained, and cut into about 30 mm pieces for the measurement. The measurement result was 0.662.

### 5-6. Measurement of moisture value

The moisture value of the noodle strings of the packaged noodle D was measured in the same manner as the measurement method described in the section 2-2 above. The results are shown in Table 4.

### 5-7. Measurement of Brix value

The Brix values of the immersion liquid before and after immersion in the step of "5-3. immersion treatment" were measured in the same manner as the measurement method described in the section 2-3 above. The results are shown in Table 4.

### 5-8. Sensory evaluation

Sensory evaluation for the packaged noodle D was conducted in the same manner as the evaluation method described in the section 2-4 above. The results are shown in Table 4.

Additionally, the weights (g) of the naturally thawed pregelatinized noodle (labeled as "after thawing" and "before immersing") and the immersion liquid-absorbed noodle (labeled as "after immersing") are shown in Table 4.

**[Table 4]**

| Packaged noodle No. | Dextrin | | Weight (g) | | | Yield | Brix value | | Moisture value (wt%) | Sensory evaluation | | | Breaking strength | | Overall score |
|---|---|---|---|---|---|---|---|---|---|---|---|---|---|---|---|
| | DE valu | Conc. (wt%) | After thawing | Before immer sing | After immer sing | | Before immersing (immersion liquid) | After immersing (immersion liquid) | | Brow ning | Separa tion | Sweet taste | (N) | Sc ore | |
| D | 8 | 40 | 1312 | | 1283 | 97.8% | 42.5 | 33.5 | 57.7% | 2 | 2 | 2 | 0.726 | 2 | 8 |
| Normally heat-treated noodle d | | | | | | | | | | | | | 0.662 | | |

### [6. Production, measurement, and evaluation of packaged noodle (pasta)]

### 6-1. Preparation of pregelatinized noodle

The dried pasta ("Penne," manufactured by Divella, moisture value 12.3% by mass (measured value)) 174 g was put into boiling water, and boiled and heated for 5 minutes, and then lightly rinsed with water and drained. As such, the pregelatinized noodle was obtained in an amount of 288 g.

### 6-2. Preparation of immersion liquid

The immersion liquid was prepared with water at 58% by mass, salt at 2% by mass, and dextrin with a DE value of 8 ("Pindex #1," manufactured by Matsutani Chemical Industry) at 40% by mass.

### 6-3. Immersion treatment and solid-liquid separation treatment

The pregelatinized noodle was subjected to immersion treatment using the immersion liquid (at 0°C to 20°C) for 17 hours, and then left to stand to drain the immersion liquid using a punching bowl for 10 minutes (solid-liquid separation treatment). As such, the immersion liquid-absorbed noodle was obtained in an amount of 330 g.

### 6-4. Heat sterilization treatment

The immersion liquid-absorbed noodle 180 g was filled into a retortable container ("Retortable bag," 150 mm x 200 mm, manufactured by TOPPAN Inc.), the opening of the retortable container was sealed using the vacuum packaging machine ("Kashiwagi vacuum packaging machine," manufactured by NPC Incorporated), and the container was subjected to heat sterilization treatment using the spray-type retort sterilizer (manufactured by HISAKA WORKS, LTD.) to produce the packaged noodle E. The pressured heat sterilization conditions were set at 125°C with a maximum pressure of 0.25 MPa. After the temperature inside the equipment reached 125°C, its heating time was for 6 minutes with an F value of 6.5.

### 6-5. Measurement of breaking strength

The breaking strength of the packaged noodle E was measured in the same manner as the measurement method described in the section 2-1 above except that after draining, the noodle string was cut into four equal lengths as a sample. The results are shown in Table 5.

As a comparison sample, the normally heat-treated noodle e was prepared by putting a dried pasta identical with that used in the section 6-1 above into boiling water and boiling and heating for 12 minutes. The normally heat-treated noodle e was drained, and cut into four equal lengths for measurement. The measurement result was 1.62.

### 6-6. Measurement of moisture value

The moisture value of the noodle strings of the packaged noodle E was measured in the same manner as the measurement method described in the section 2-2 above. The results are shown in Table 5.

### 6-7. Measurement of Brix value

The Brix values of the immersion liquid before and after immersion in the step of "5-3. immersion treatment" were measured in the same manner as the measurement method described in the section 2-3 above. The results are shown in Table 5.

### 6-8. Sensory evaluation

Sensory evaluation for the packaged noodle E was conducted in the same manner as the evaluation method described in the section 2-4 above. The results are shown in Table 5.

Additionally, the weights (g) of the non-pregelatinized noodle (labeled as "before boiling"), pregelatinized noodle (labeled as "before immersing"), and immersion liquid-absorbed noodle (labeled as "after immersing") are shown in Table 5.

**[Table 5]**

| Packaged noodle No. | Dextrin | | Weight (g) | | | Yield | Brix value | | Moisture value (wt%) | Sensory evaluation | | | Breaking strength | | Overall score |
|---|---|---|---|---|---|---|---|---|---|---|---|---|---|---|---|
| | DE value | Conc. (wt%) | Before boiling | Before immer sing | After immer sing | | Before immersing (immersion liquid) | After immersing (immersion liquid) | | Brow ning | Separation | Sweet taste | (N) | Sc ore | |
| E | 8 | 40 | 174 | 288 | 330 | 189.7% | 42.5 | 38 | 46.1% | 2 | 2 | 2 | 1.577 | 2 | 8 |
| Normally heat-treated noodle e | | | | | | | | | | | | | 1.62 | | |

As the results shown in Tables 2 to 5, the examples in which immersion treatment was performed using the immersion liquid containing dextrin with a DE value of 4 to 25 at 20% by mass to 50% by mass (the packaged noodles B to E) showed that regardless of the type of noodle, the value of breaking strength were equivalent to those of normally heat-treated noodles b to e, respectively, with no browning, favorable separation, and no sweet taste.

### [7. Production, measurement, and evaluation of comparative packaged noodle (pasta)]

### 7-1. Preparation of pregelatinized noodle

One hundred grams of the dried pasta ("Spaghetti Golden 1.6 mm," made by Hagoromo Foods Corporation, moisture value 11.8% by mass (measured value), noodle thickness 1.6 mm) as the non-pregelatinized noodle was put into boiling water, and boiled and heated for 7 minutes while stirring to separate the strings, and then lightly rinsed with water and drained. As such the pregelatinized noodle was obtained in an amount of 225 g.

### 7-2. Heat sterilization treatment

One hundred grams of the pregelatinized noodle was filled into the retortable container ("retortable bag," 130 mm x 170 mm, manufactured by TOPPAN Inc.), the opening of the retortable container was sealed using the vacuum packaging machine ("Kashiwagi vacuum packaging machine" manufactured by NPC Incorporated), and the container was subjected to heat sterilization treatment using the spray-type retort sterilizer (manufactured by HISAKA WORKS, LTD.) to produce the comparative packaged noodle F. The pressured heat sterilization conditions were set at 125°C with a maximum pressure of 0.25 MPa. After the temperature inside the equipment reached 125°C, its heating time was for 6 minutes with an F value of 6.5.

### 7-3. Measurement of breaking strength

The breaking strength of the comparative packaged noodle F was measured in the same manner as the measurement method described in the section 2-1 above. The results are shown in Table 6.

### 7-4. Measurement of moisture value

The moisture value of the noodle strings of the comparative packaged noodle F was measured in the same manner as the measurement method described in the section 2-2 above. The results are shown in Table 6.

### 7-5. Sensory evaluation

Sensory evaluation for the comparative packaged noodle F was conducted in the same manner as the evaluation method described in the section 2-4 above. The results are shown in Table 6.

Additionally, the weights (g) of the non-pregelatinized noodle (labeled as "before boiling") and pregelatinized noodle (labeled as "after boiling") are also shown in Table 6.

**[Table 6]**

| Packaged noodle No. | Weight (g) | | Moisture value (wt%) | Sensory evaluation | | | Breaking strength | | Overall score |
|---|---|---|---|---|---|---|---|---|---|
| | Before boiling | After boiling | | Browning | Separation | Sweet taste | (N) | Score | |
| F | 100 | 225 | 61.2% | 2 | 0 | 2 | 0.220 | 0 | 4 |

As the results shown in Table 6, the comparative packaged noodle F in which immersion treatment was not performed had a lower value of breaking strength than that of the packaged noodle A (the packaged noodles A-1b to A-1f, A-2b to A-2f, A-3b to A-3f) in which immersion treatment was performed using the immersion liquid containing dextrin with a DE value of 4 to 25 at 20% by mass to 50% by mass. In addition, the noodle strings of the comparative packaged noodle F stuck each other, and thus the separation was unfavorable.

### [8. Production, measurement, and evaluation of comparative packaged noodle (udon)]

### 8-1. Preparation of pregelatinized noodle

The frozen *udon* ("Men Ippon Udon," manufactured by TAKARA FOODS, moisture value 67.4% by mass (measured value), noodle thickness 3.0 mm (specification sheet), cutting edge No. 8) 522 g ,which was still frozen, was boiled and heated in boiling water for 1 minute, and then lightly rinsed with water and drained. As such, the pregelatinized noodle was obtained in an amount of 577 g.

### 8-2. Heat sterilization treatment

One hundred grams of the pregelatinized noodle was filled into the retortable container ("retortable bag," 130 mm x 170 mm, manufactured by TOPPAN Inc.), the opening of the retortable container was sealed using the vacuum packaging machine ("Kashiwagi vacuum packaging machine," manufactured by NPC Incorporated), and the container was subjected to heat sterilization treatment using the spray-type retort sterilizer (manufactured by HISAKA WORKS, LTD.) to produce the comparative packaged noodle G. The pressured heat sterilization conditions were set at 125°C with a maximum pressure of 0.25 MPa. After the temperature inside the equipment reached 125°C, its heating time was for 6 minutes with an F value of 7.

### 8-3. Measurement of breaking strength

The breaking strength of the comparative packaged noodle G was measured in the same manner as the measurement method described in the section 2-1 above. The results are shown in Table 7.

### 8-4. Measurement of moisture value

The moisture value of the noodle strings of the comparative packaged noodle G was measured in the same manner as the measurement method described in the section 2-2 above. The results are shown in Table 7.

### 8-5. Sensory evaluation

Sensory evaluation for the comparative packaged noodle G was conducted in the same manner as the evaluation method described in the section 2-4 above. The results are shown in Table 7.

Additionally, the weights (g) of the non-pregelatinized noodle (labeled as "before boiling") and pregelatinized noodle (labeled as "after boiling") are also shown in Table 7.

**[Table 7]**

| Packaged noodle No. | Weight (g) | | Moisture value (wt%) | Sensory evaluation | | | Breaking strength | | Overall score |
|---|---|---|---|---|---|---|---|---|---|
| | Before boiling | After boiling | | Browning | Separation | Sweet taste | (N) | Score | |
| G | 522 | 577 | 71.0% | 2 | 0 | 2 | 0.315 | 0 | 4 |

As the results shown in Table 7, the comparative packaged noodle G in which immersion treatment was not performed had a lower value of breaking strength than that of the packaged noodle D in which immersion treatment was performed using the immersion liquid containing dextrin with a DE value of 4 to 25 at 20% by mass to 50% by mass. In addition, the noodle strings of the comparative packaged noodle G stuck each other, and thus the separation was unfavorable.

### Industrial Applicability

The packaged noodle according to one embodiment of the present invention maintains appropriate firmness even after long-term storage, and simultaneously has high versatility. Therefore, the packaged noodle has an added value as a new processed food.

## Claims

1. A method of producing a packaged noodle, comprising:
preparing a pregelatinized noodle;
subjecting the pregelatinized noodle to immersion treatment using an immersion liquid comprising a starch degradation product with a DE value of 4 to 25 at a concentration of 20% by mass to 50% by mass, and subject to solid-liquid separation treatment to obtain an immersion liquid-absorbed noodle; and
subjecting a container filled with the immersion liquid-absorbed noodle to heat sterilization treatment to obtain the packaged noodle.

2. The method according to claim 1, wherein the packaged noodle has a noodle component with a moisture value of 45% by mass to 63% by mass.

3. The method according to claim 1, wherein the immersion liquid has a Brix value between 20 and 50.

4. The method according to claim 1, wherein the packaged noodle is at least one noodle selected from the group consisting of Chinese noodle, pasta, *udon* and *somen.*

5. The method according to claim 1, wherein the heat sterilization treatment is retort sterilization treatment.

6. The method according to claim 1, wherein the immersion liquid further comprises at least one material selected from the group consisting of salt and acidifier.

7. The method according to claim 1, wherein the packaged noodle is substantially unseasoned.
